Europäisches Patentamt

European Patent Office

Office européen des brevets

(11) Veröffentlichungsnummer: **0 416 292 A1**

## EUROPÄISCHE PATENTANMELDUNG

(21) Anmeldenummer: **90114890.8**

(51) Int. Cl.⁵: **F16D 65/56**

(22) Anmeldetag: **02.08.90**

(30) Priorität: **02.09.89 DE 8910474 U**

(43) Veröffentlichungstag der Anmeldung:
**13.03.91 Patentblatt 91/11**

(84) Benannte Vertragsstaaten:
**DE FR GB IT**

(71) Anmelder: **Knott GmbH**
**Obinger Strasse 15**
**W-8201 Eggstätt(DE)**

(72) Erfinder: **Hofstetter, Hermann**
**Seestrasse 58**
**W-8221 Seeon(DE)**

(74) Vertreter: **Flach, Dieter Rolf Paul, Dipl.-Phys.**
**et al**
**Patentanwälte Andrae/Flach/Haug/Kneissl**
**Prinzregentenstrasse 24**
**W-8200 Rosenheim(DE)**

(54) **Nachstell- und Zentriervorrichtung für eine Servobremse.**

(57) Eine bekannte Nachstell- und Zentriervorrichtung für eine Servobremse weist ein in axialer Richtung wirkendes Durchschiebeschloß auf. Um den Bauaufwand und die Anzahl der benötigten Teile bei der an sich funktionstüchtigen Nachstell- und Zentriervorrichtung weiter zu verringern, ist erfindungsgemäß vorgesehen, daß die beiden Nachstellhebel (19) und damit die beiden zugehörigen Nachstellklinken (23) mittels einer gemeinsamen Federeinrichtung (51) an ihrem jeweiligen zugeordneten Nachstellzahnrad (17) vorgespannt anliegend gehalten sind, und daß dazu die Federeinrichtung (51) mit ihrer größten Komponente quer zur Durchschieberichtung auf die beiden Nachstellhebel (19) wirkt, wobei die Federeinrichtung (51) in dem Raum zwischen dem Boden des im wesentlichen U-förmigen Führungsbockes (1) und den Nachstellrohren (5) hindurchverläuft.

Fig. 1

EP 0 416 292 A1

## NACHSTELL- UND ZENTRIERVORRICHTUNG FÜR EINE SERVOBREMSE

Die Erfindung betrifft eine Nachstell- und Zentriervorrichtung für eine Servobremse nach dem Oberbegriff des Anspruches 1.

Eine gattungsbildende Nachstell- und Zentriervorrichtung für eine Servobremse ist aus der DE 33 04 593 C2 bekannt geworden. Diese Nachstell- und Zentriervorrichtung zeichnet sich durch ihre äußerst kompakte Bauweise und vor allem durch ihre hohe Betriebssicherheit aus. Bei dieser vorbekannten Nachstell- und Zentriervorrichtung wird dabei erstmals das Prinzip angewandt, daß neben der Zentrierfeder keine weitere Rückstellfeder für den einen oder die beiden Nachstellhebel mehr benötigt wird. Vielmehr wird die Rückstellung und damit das Wirksamwerden der Nachstellhebel allein durch die Zentrierfeder ermöglicht.

Obgleich sich die gattungsbildende Nachstell- und Zentriervorrichtung in der Praxis durchaus äußerst bewährt hat, ist es Aufgabe der vorliegenden Erfindung, diese so weiter zu entwickeln, daß deren Bauaufwand und die Anzahl der benötigten Teile nochmals vermindert wird.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird in verblüffender Art und Weise die hohe Funktions- und Betriebssicherheit der gattungsbildenden Nachstell- und Zentriervorrichtung aufrechterhalten, obgleich die Zahl der benötigten Bauteile nochmals deutlich verringert und vor allem auch die damit verbundenen Herstellungskosten vermindert werden können.

Bei der vorliegenden Erfindung erweist es sich als günstig, daß die beiden Nachstellhebel über eine zwischen beiden wirkende gemeinsame Federeinrichtung so aufeinander zu gespannt gehalten werden, daß die jeweils daran sitzenden Nachstellklinken im sicheren Eingriff mit dem jeweiligen Nachstellzahnrad 17 gehalten werden. Es wird somit nur noch eine einzige Feder zum Einbau benötigt, um diese Vorspannwirkung aufeinander zu zu erzeugen.

In einer bevorzugten Ausführungsform wird dazu eine Spiralfeder verwandt, die in einer besonders bevorzugten Ausführungsform der Erfindung an dem einen Nachstellhebel an dessen Außenseite und von dessen nach außen weisenden Spiralkörper-Ende ein zum zweiten Nachstellhebel führender Federbügel ausgeht. Bevorzugt kann die so gebildete Federeinrichtung einstückig ausgebildet sein.

Um eine möglichst sichere und einfache Verankerung einer so gebildeten Federeinrichtung zu gewährleisten, sind die beiden Nachstellhebel identisch ausgebildet, und zwar bevorzugt mit einem Langloch und einer benachbart sitzenden geringer dimensionierten Durchtrittsöffnung unter Bildung eines dazwischen liegenden Einhängsteges für einen Ankerbügel am Ende des Federsteges der Feder.

Um eine gleichmäßige Druckbelastung und damit Nachstellwirkung der beiden Nachstellhebeln zu gewährleisten, ist die Feder bevorzugt leicht schräg zur Durchschieberichtung eingebaut.

Dadurch läßt sich der Druckauflagepunkt des spiralförmigen Federkörpers an dem einen Klinkenhebel eindeutig festlegen, der so gewählt wird, daß der Abstand von dort bis zur Drehachse dem Abstand zwischen dem Einhängsteg und der Drehachse am gegenüberliegenden Nachstellhebel entspricht.

Zur vereinfachten Bauweise trägt schließlich auch bei, daß als Drehachse für die Nachstellhebel lediglich eine gekantete, d.h. umgebogene Lasche dient, die in einer entsprechenden Bohrung im Führungsbock eingreift. Als zusätzliche Sicherung kann zusätzlich bei der als vorzugsweise Ausschwenk- und Rückschwenkansatz dienenden Zunge eine abgewinkelte Sicherungslasche vorgesehen sein.

Durch die erfindungsgemäße Nachstell- und Zentriervorrichtung wird es also möglich, daß abweichend von der gattungsbildenden Einrichtung weder für den einen noch für den anderen Nachstellhebel weder jeweils eine Bolzensicherung noch eine Federscheibe oder gar eine Anlege- oder Unterlegscheibe benötigt wird. Auch die Fertigung eines separaten Bolzens zur Bildung einer Drehachse für die Nachstellhebel sowie die Einbringung einer Bohrung zur Verankerung des Bolzens ist ebenfalls nicht mehr notwendig. Auch ein im gattungsbildenden Stand der Technik nur zur Sicherheit zwar vorgesehener Sperrbügel wird definitiv nicht mehr benötigt.

Weitere Vorteile, Einzelheiten und Merkmale der Erfindung ergeben sich nachfolgend aus den anhand von Zeichnungen näher dargestellten Ausführungsbeispiel. Dabei zeigen im einzelnen:

Figur 1 : eine erfindungsgemäße Nachstell- und Zentriervorrichtung in schematischer Seitenansicht;

Figur 2 : eine Draufsicht längs der Linie II-II in Figur 1;

Figur 3 : eine Stirnseitenansicht teilweise im Schnitt auf die Ausführungsbeispiele gemäß den Figuren 1 und 2;

Figur 4 : ein Nachstellhebel 19 im ausgebauten Zustand in Seitenansicht.

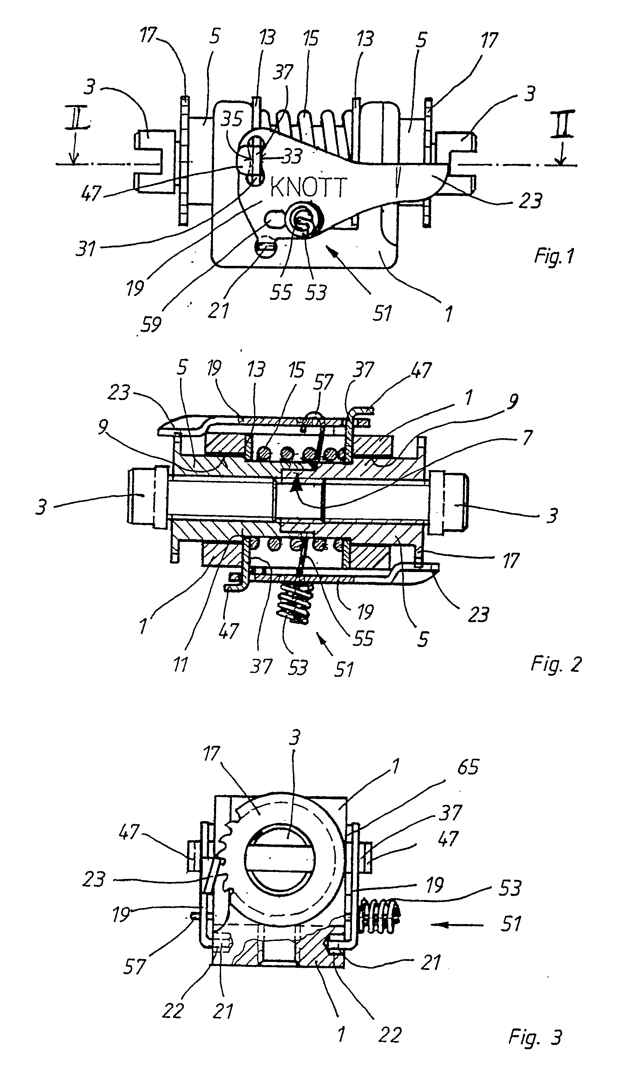

Nachfolgend wird die Nachstell- und Zentriervorrichtung anhand den Figuren 1 bis 3 erläutert, wobei auf den Offenbarungsgehalt der eingangs zitierten DE 33 04 593 C2 in vollem Umfange Bezug genommen und zum Inhalt dieser Anmeldung gemacht wird. Die in der vorliegenden Anmeldung wiedergegebenen und mit der vorstehend genannten Veröffentlichung identischen Bezugszeichen entsprechen dabei identischen oder wirkungsgleichen Gegenständen.

In den Zeichnungen ist die Nachstell- und Zentriervorrichtung für Servobremsen mit einem im wesentlichen U-förmigen Führungsbock 1 gezeigt, der üblicherweise auf einem Bremsträger fest anbringbar ist. In dem Führungsbock 1 ist in Axialbohrungen ein Durchschiebeschloß angeordnet, das in seiner Axialrichtung beidseitig verschiebbar ist und hier über die Bremsbetätigungskraft von der jeweiligen Primär- auf die Sekundärbacke überträgt.

Die Nachstell- und Zentriervorrichtung umfaßt dabei gegenüberliegend Gewindebolzen 3, die in ein den jeweiligen Bremsbacken zugeordnetes Nachstellrohr 5 eingeschraubt sind. Die Nachstellrohre 5 sind an ihren aufeinander zu liegenden Stirnseiten éabgestuft und greifen hier unter Bildung eines Führungsabschnittes 7 ineinander. Bei vergrößerter Bauausführung kann an dieser Stelle auch über entsprechende Stufenabsätze ein eingepaßtes Verbindungsrohr vorgesehen sein.

Die Nachstellrohre 5 sind jeweils in den Axialbohrungen 9 in den beiden parallelen Schenkeln des U-Führungsbockes 1 drehbar gelagert.

An den beiden parallelen Schenkeln des U-förmigen Führungsbokkes 1 ist jeweils innen anliegend eine Nachstellscheibe 13 vorgesehen, die nach außen hin gegen ein Verschieben durch eine Ringschulter 11 auf dem jeweiligen Nachstellrohr 5 gesichert ist.

Zwischen den beiden Nachstellscheiben 13 sitzt die Zentrierfeder 15, die beide Nachstellscheiben 13 druckbeaufschlagt.

Außerhalb der parallelen Schenkel des Führungsbockes 1 sitzt an den beiden Nachstellrohren 5 drehfest ein Nachstellzahnrad 17, in welches jeweils eine Nachstellklinke 23 eines Nachstellhebels 19 eingreift. Die Schwenkachse 21 des Nachstellhebels 19 wird durch eine abgewinkelte Lasche gebildet, die mit dem Nachstellhebel 19 einstückig ausgebildet ist und in eine entsprechende Bohrung 22 im Führungsbock 1 eingreift.

In jedem Nachstellhebel ist eine Ausnehmung 31 eingebracht, durch welche ein Betätigungsansatz 37 hindurchragt, der in Ausschwenkrichtung mit einem ersten in die Ausnehmung 31 konvex hineinragenden Anschlag 33 und beim Rückschwenken mit einem gegenüberliegend in die Ausnehmung 31 konvex hineinragenden zweiten Anschlag 35 zusammenwirkt. Zur Sicherung ist der durch die Ausnehmung 31 hindurchragende Betätigungsansatz 37 außenliegend jeweils unter Bildung einer Sicherungslasche 47 abgewinkelt. Eine Abwinklung kann aber auch entgegengesetzt oder nach oben oder unten zu der zeichnerischen Darstellung also um 90° versetzt liegen oder in sonstiger geeigneter Art und Weise ausgebildet sein.

Die Funktionsweise erfolgt wie in der DE 33 04 593 C2 beschrieben, wobei bei einer Durchschiebebewegung das Durchschiebeschloß in der einen oder anderen Richtung jeweils über das zugeordnete Nachstellrohr 5 sowie die darauf nach innen verschobene Nachstellscheibe 13 und den daran ausgebildeten Betätigungsansatz 37 der jeweils zugeordnete Nachstellhebel 19 um seine Drehachse 21 nach außen von den Zähnen des Nachstellzahnrades 17 nach auswärts verschwenkt wird. Bei vergrößerte Abnützung des Bremsbelages an den Bremsbacken wird diese Ausschwenkbewegung schließlich so groß, daß ein nächster Zahn des Nachstellzahnrades 17 hintergriffen werden kann.

Bei anschließender Bremsenrückstellung wird das Durchschiebeschloß wieder durch die zentrierte Feder 15 in die Ausgangslage verschoben, wobei die jeweils zunächst verschobene Nachstellscheibe 13 in die in den Figuren 1 bis 3 dargestellte Ausgangslage zurückverstellt wird. Über den zugehörigen Betätigungsansatz 37 wird unter Anlage an dem zweiten Anschlag 35 dann in bekannter Weise der Nachstellhebel 19 mit seiner Nachstellklinke 23 rückverstellt, wobei das jeweils zugeordnete Nachstellzahnrad 17 um einen Klinkenzahn so verdreht wird, daß darüber bei unverdrehter Halterung und Abstützung der zugeordneten Bremsbacken das jeweilige Nachstellrohr 5 im Sinne einer Abstandsvergrößerung aus dem zugeordneten Nachstellrohr 5 leichter herausgedreht wird.

Um immer einen sicheren Eingriff der Nachstellklinken 23 in dem jeweiligen Nachstellzahnrad 17 zu gewährleisten, ist eine Federeinrichtung 51 in Form einer Spiralfeder vorgesehen. Der Federkörper 53, d.h. der Spiral-Federkörper 53, greift außenliegend an dem einen der beiden Nachstellhebel 19 an und liegt auf dessen Seite außen auf. Das freie nach außen weisende Ende des Federkörpers 53 geht von seinem eigentlichen ringförmigen Federabschnitt in einen durch den Federkörper 53 hindurch zurückgeführten geraden Federbügel 55 über, der am gegenüberliegenden Ende über einen bogenförmigen Ankerabschnitt 57 am gegenüberliegenden Nachstellhebel 19 verankerbar ist.

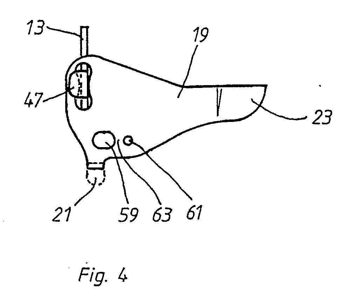

Wie aus Figur 4 ersichtlich ist, weisen die beiden identischen Nachstellhebel 19 einmal eine Langlochausnehmung 59 und eine daneben liegende Rundlochausnehmung 61 unter Bildung eines dazwischen liegenden Einhängsteges 63 auf.

Beim Verankern der Federeinrichtung 51 in den beiden auch bezüglich der Langlochausnehmung 59 in der Rundlochausnehmung 61 identisch gebildeten Nachstellzahnräder 17 wird zunächst über das Rundloch 61 der bogenförmige Ankerabschnitt 57 und dann der gesamte gerade verlaufende Federbügel 55 soweit eingeführt, bis auf dem betreffenden Nachstellhebel 19 der eigentliche spiralförmige Federkörper 53 an seiner Außenseite aufliegt, wie dies in den Figuren 1 bis 3 dargestellt ist. Danach wird unter Zusammenpressung des Federkörpers 53 der bogenförmige Ankerabschnitt 57 durch das am gegenüberliegenden Nachstellhebel 19 ausgebildete Langloch 59 hindurchgeführt und der bogenförmige Ankerabschnitt 57 in Richtung des Einhängsteges 63 soweit zur Seite bewegt, damit bei Druckentlastung auf den Federkörper 53 nunmehr das freie Ende des bogenförmigen Ankerabschnittes 57 unter Umgreifung des Einhängsteges 63 am gegenüberliegenden Nachstellhebel 19 ebenfalls in die Rundlochausnehmung 61 eintaucht. Dadurch wird der Federkörper 53 sicher gehalten.

Vor allem auch kann der Federkörper 53 an der Außenseite des einen Nachstellhebels 19 nicht verrutschen, da der gerade Federbügel 55 dort durch die Rundlochausnehmung 61 geführt ist und ein Verrutschen praktisch nicht zuläßt.

Wie aus den Zeichnungen ferner ersichtlich ist, wird die Feder leicht schräg eingebaut. Dadurch wird gewährleistet, daß der Abstand zwischen dem Einhängsteg 63 und der Schwenkachse 21 an dem einen Nachstellhebel dem Abstand zwischen der Schwenkachse 21 und dem durch den Federkörper 53 gebildeten Auflage-Druckpunkt am gegenüberliegenden Nachstellhebel 19 gleich ist. Mit anderen Worten wird durch den leicht winkeligen Einbau gewährleistet, daß bei der Darstellung gemäß Figur 2 der Federbügel 55 links auf der zu seiner Schwenkachse 21 zugewandt liegenden Seite stärker auf dem zugeordneten Nachstellhebel 19 aufliegt und dadurch die Hebelübersetzung festigt und bestimmt, die identisch der Hebelübersetzung am gegenüberliegenden Nachstellhebel 19 entspricht. Dadurch werden beide Nachstellhebel 19 durch die einzige Federeinrichtung gleichermaßen druckbelastet, wobei bei entsprechender Durchschiebebewegung am Durchschiebeschloß eine gleichmäßige Verstellung beider Nachstellzahnräder 17 gewährleistet wird.

Abweichend vom gezeigten Ausführungsbeispiel könnte natürlich der Federkörper 53 an seinem nach außen weisenden Ende über ein Widerlager druckbelastet sein, von dem aus der Federbügel 55 ausgeht.

Da, wie vor allem aus Figur 1 ersichtlich ist, der Federbügel 55 in dem Bereich zwischen dem unteren die beiden parallelen Stege des Führungsbockes 1 verbindenden Boden und den Nachstellrohren 5 bzw. den Gewindebolzen 3 hindurchgeführt ist, ist kein zusätzlicher Bauraum benötigt. Im Gegenteil wird durch dieses konstruktive Merkmal sogar die Federeinrichtung 51 geschützt untergebracht.

Wie insbesondere aus der zeichnerischen Darstellung gemäß den Figuren 1 bis 3 hervorgeht, greift die Federeinrichtung 51 an dem jeweiligen Nachstellhebel 19 in einem Bereich an, der durch eine durch die Schwenkachse 21 gelegte Vertikale und das zugehörige Nachstellzahnrad 17 zum einen und durch eine parallel zu den Nachstellrohren 5 gelegten Horizontallinie durch die Mitte des Betätigungsansatzes 37, also die Mitte der Ausnehmung 31 bzw. wiederum durch die Schwenkachse 21 gelegte Horizontale beschränkt ist. Hierdurch wird eine Kraftkomponente derart auf den jeweiligen Nachstellhebel 19 ausgeübt, die den Nachstellhebel 19 unmittelbar an einem Ansatz 65 der jeweiligen Nachstellscheibe 13 andrückt, so daß trotz vorhandenem möglichen Spiel zwischen der Außenseite des Nachstellhebels zur Innenseite der Sicherungslasche 47 der jeweilige Nachstellhebel ohne zu wackeln, direkt am Ansatz 65, d.h. an der zugehörigen Nachstellscheibe 13 anliegt.

## Ansprüche

1. Nachstell- und Zentriervorrichtung für eine Servobremse mit einem in Seitenansicht im wesentlichen U-förmigen ortsfesten Führungsbock, in dessen Axialbohrungen ein Durchschiebeschloß aus einer zentrischen Stellung heraus gegen die Kraft einer Zentrierfeder in beiden Durchschieberichtungen axial verschiebbar gelagert ist, welches zwei Gewindebolzen umfaßt, die in zwei in axialer Verlängerung zueinander angeordneten Nachstellrohren eingeschraubt sind, die jeweils mit einem axialsymmetrisch hierzu angeordneten und eine einseitig wirkende Sperrverzahnung aufweisenden Nachstellzahnrad fest verbunden sind, in das jeweils eine bei einer entsprechenden Durchschiebebewegung des Durchschiebeschlosses eine zugehörige Umfangsbewegung am zugeordneten Nachstellzahnrad ausführende Nachstellklinke eingreift, die bei zu weitem Durchschieben in Richtung auf die zugeordnete Bremsbacke eine Auswärtsschwenkung durchführt und einen Zahn überrastet und bei der nachfolgenden durch die Kraft der Zentrierfeder bewirkte Rückstellung des Durchschiebeschlosses und rückläufiger Umfangsbewegung am vorher überrasteten Zahn angreift und das Nachstellzahnrad im Sinne eines Herausdrehens des Gewindebolzens verdreht, wobei die beiden Nachstellklinken an den beiden Nachstellhebeln sitzen, die um jeweils eine am ortsfesten Bremsteil angeordnete Schwenkachse verschwenkbar gehalten sind und dazu in bezug auf ihre Schwenkachsen einen seitlich versetzten Anschlag aufweisen, der jeweils in der Bewegungsbahn eines mit dem Durchschiebeschloß mitbewegten, ein Ausschwenken der Nachstellhebel bewirkenden Ausschwenkansatzes liegt, wobei als Rückstellfeder die Zentrierfeder dient und hierzu in jeder Durchschieberichtung ein mit dem Durchschiebeschloß mitbewegter Rückstellansatz vorgesehen ist, der jeweils mit einem weiteren am zugehörigen Nachstellhebel in entgegengesetzter Richtung zum ersten Anschlag wirkenden zweiten Anschlag so zusammenwirkt, daß nach erfolgter Durchschiebebewegung bei der Zentrierung des Durchschiebeschlosses der mitbewegte Rückstellansatz ein Rückschwenken des Nachstellhebels in seine Ausgangslage bewirkt, **dadurch gekennzeichnet**, daß die beiden Nachstellhebel (19) und damit die beiden zugehörigen Nachstellklinken (23) mittels einer gemeinsamen Federeinrichtung (51) an ihrem jeweiligen zugeordneten Nachstellzahnrad (17) vorgespannt anliegend gehalten sind, und daß dazu die Federeinrichtung (51) mit ihrer größten Komponente quer zur Durchschieberichtung auf die beiden Nachstellhebel (19) wirkt, wobei die Federeinrichtung (51) in dem Raum zwischen dem Boden des im wesentlichen U-förmigen Führungsbockes (1) und den Nachstellrohren (5) hindurchverläuft.

2. Nachstell- und Zentriervorrichtung nach Anspruch 1, **dadurch gekennzeichnet**, daß die Federeinrichtung (51) aus einer Spiralfeder besteht.

3. Nachstell- und Zentriervorrichtung nach Anspruch 1 oder 2, **dadurch gekennzeichnet**, daß die Federeinrichtung einen vorzugsweise spiralförmigen Federkörper (53) aufweist, der an dem einen Nachstellhebel (19) unter Druckbeaufschlagung außen aufliegt und dessen entgegengesetzte Kraftkomponente über einen gegenüberliegend am zugehörigen Nachstellhebel (19) am Federkörper (53) angreifenden Federbügel (55) abgegriffen wird, wobei der Federbügel (55) an dem zweiten Nachstellhebel (19) verankert ist.

4. Nachstell- und Zentriervorrichtung nach Anspruch 3, **dadurch gekennzeichnet**, daß der Federbügel (55) durch eine entsprechende Ausnehmung (61, 59) hindurchgeführt ist.

5. Nachstell- und Zentriervorrichtung nach Anspruch 3 oder 4, **dadurch gekennzeichnet**, daß die beiden identisch ausgebildeten Nachstellhebel (19) ein Langloch und danebenliegend ein geringer dimensioniertes Loch (Rundausnehmung 61) unter Bildung eines dazwischen liegenden Einhängsteges (63) aufweisen, an welchen ein in den Federbügel (55) überstehender bogenförmiger Ankerabschnitt (57) verankerbar ist.

6. Nachstell- und Zentriervorrichtung nach Anspruch 5, **dadurch gekennzeichnet**, daß der bogenförmige Ankerabschnitt (57) an dem zugehörigen Nachstellhebel (19) durch eine entsprechend lang bemessene Lochausnehmung (59) von innen nach außen hindurchgesteckt und so unter Entspannung des Federkörpers (53) rückverstellt ist, daß das freie Ende des bogenförmigen Ankerabschnittes (57) unter Umgreifung des Einhängsteges (63) in die benachbart zu einer Langlochausnehmung (59) vorgesehenen geringer dimensionierten Ausnehmung (Rundlochausnehmung 61) eintaucht.

7. Nachstell- und Zentriervorrichtung nach einem der ansprüche 3 bis 6, **dadurch gekennzeichnet**, daß der Federbügel (55) in dem von dem Federkörper (53) direkt druckbeaufschlagten Nachstellhebel (19) durch das dort eingebrachte gegenüber der Langlochausnehmung (59) geringer dimensionierten Ausnehmung (Rundlochausnehmung 61) eingeführt ist.

8. Nachstell- und Zentriervorrichtung nach einem der Ansprüche 1 bis 7, **dadurch gekennzeichnet**, daß die Federeinrichtung (51) und damit der Federbügel (55) in Draufsicht zur Durchschieberichtung leicht winkelig eingebaut ist.

9. Nachstell- und Zentriervorrichtung nach Anspruch 9, **dadurch gekennzeichnet**, daß die Federeinrichtung (51) und damit der Federbügel (55) in einem Winkel von 1$^\circ$ bis 20$^\circ$, vorzugsweise in einem Winkel von 2$^\circ$ bis 12$^\circ$, insbesondere in einem Winkel von 3$^\circ$ bis 8$^\circ$ winkelig zur Axialrichtung des Durchschiebeschlosses eingebaut ist.

10. Nachstell- und Zentriervorrichtung nach einem der Ansprüche 1 bis 9, **dadurch gekennzeichnet**, daß der Abstand zwischen dem Verankerungspunkt der Federeinrichtung (51) an beiden Nachstellhebeln (19) zur jeweils zugeordneten Schwenkachse (21) gleich ist.

11. Nachstell- und Zentriervorrichtung nach einem der Ansprüche 1 bis 10, **dadurch gekennzeichnet**, daß die Schwenkachse (21) durch eine Teil des Nachstellhebels (19) bildende umgebogene, abgewinkelte Lasche gebildet ist, die in eine entsprechende Bohrung (22) im Führungsbock (1) eingreift.

12. Nachstell- und Zentriervorrichtung nach einem der Ansprüche 1 bis 11, **dadurch gekennzeichnet**, daß der durch die Ausnehmung (31) im jeweiligen Nachstellhebel (19) hindurchragende Betätigungsansatz (37) in eine dazu abgewinkelte Sicherungslasche (47) übergeht.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| P,X | DE-U-8910474 (KNOTT) <br> * das ganze Dokument * <br> --- | 1-12 | F16D65/56 |
| X | DE-A-3112550 (DEUTSCHE PERROT-BREMSE) <br> * Anspruch 4; Figuren 1-3 * <br> --- | 1-3, 7, 11 | |
| A | US-A-3051275 (KNOCKE) <br> * Figuren 4, 4a, Pos.37 * <br> --- | 2 | |
| D,A | DE-C-3304593 (MASCHINENBAU KNOTT) <br> ------ | | |

| | **RECHERCHIERTE SACHGEBIETE (Int. Cl.5 )** |
|---|---|
| | F16D |

Der vorliegende Recherchenbericht wurde für alle Patentansprüche erstellt

| Recherchenort | Abschlußdatum der Recherche | Prüfer |
|---|---|---|
| BERLIN | 11 DEZEMBER 1990 | LUDWIG H.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes
    Dokument